(19) Europäisches Patentamt
European Patent Office
Office européen des brevets

(11) **EP 4 094 225 B1**

(12) **FASCICULE DE BREVET EUROPEEN**

(45) Date de publication et mention
de la délivrance du brevet:
**07.02.2024 Bulletin 2024/06**

(21) Numéro de dépôt: **20835856.4**

(22) Date de dépôt: **30.12.2020**

(51) Classification Internationale des Brevets (IPC):
***G06T 7/73*** *(2017.01)*

(52) Classification Coopérative des Brevets (CPC):
**G06T 7/73;** G06T 2207/30252

(86) Numéro de dépôt international:
**PCT/EP2020/088022**

(87) Numéro de publication internationale:
**WO 2021/148231 (29.07.2021 Gazette 2021/30)**

(54) **SYSTÈME DE DÉTERMINATION DE LA POSITION ANGULAIRE D'UNE REMORQUE**

SYSTEM ZUR BESTIMMUNG DER WINKELPOSITION EINES ANHÄNGERS

SYSTEM FOR DETERMINING THE ANGULAR POSITION OF A TRAILER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2020 FR 2000560**

(43) Date de publication de la demande:
**30.11.2022 Bulletin 2022/48**

(73) Titulaire: **Continental Autonomous Mobility Germany GmbH**
**85057 Ingolstadt (DE)**

(72) Inventeurs:
• **GUERRERO, David**
**31100 TOULOUSE (FR)**
• **LUGEZ, Boris**
**31100 TOULOUSE (FR)**

(74) Mandataire: **Continental Automotive France**
**Service Intellectual Property**
**1, avenue Paul Ourliac**
**31100 Toulouse (FR)**

(56) Documents cités:
**WO-A2-2009/027090     GB-A- 2 505 666**

## Description

### Domaine technique

La présente demande concerne un système de détermination d'au moins un angle de tangage d'une remorque par rapport à un véhicule tracteur, et un procédé associé.

### Technique antérieure

De nombreuses technologies sont actuellement développées pour aider les conducteurs à la conduite de véhicules, en leur fournissant par exemple des informations supplémentaires sur la configuration du véhicule et sa position par rapport à son environnement. Ces technologies sont également nécessaires dans une perspective de véhicules complètement autonomes. C'est le cas pour les véhicules individuels, mais aussi pour des véhicules de transports, comprenant typiquement un véhicule tracteur et une remorque.

Pour l'assistance à la conduite de tels véhicules, et notamment pour des manoeuvres visant à garer le véhicule, il est important de connaître avec précision la position angulaire de la remorque par rapport au véhicule tracteur, et notamment le lacet, le tangage, voire le roulis, en fonction de l'inclinaison de la route.

Il existe déjà des solutions de détermination de l'angle de lacet d'une remorque par rapport à un véhicule, reposant sur l'analyse d'une image acquise par une caméra située devant la remorque. On connaît par exemple la thèse de doctorat de Christopher Charles de Saxe « Visio-based trailer pose estimation for articulated vehicles », https://doi.org/10.17863/CAM.14370, 2017. La solution qui y est proposée se base sur la détection et l'analyse de la position de la face avant de la remorque, considérée comme un plan perpendiculaire à l'axe optique de la caméra. Cependant cette hypothèse est restrictive et ne s'applique pas à un grand nombre de remorques, comme des remorques transportant des citernes ou du bois, ou encore certains vans pour chevaux, par exemple.

De plus, cette méthode nécessite une phase de calibration au cours de laquelle le véhicule doit rouler en marche avant en ligne droite sur une certaine distance, pour déterminer une position de référence de la face avant de la remorque, à partir de laquelle des valeurs relatives d'angle de lacet de la remorque vont être déterminées. De ce fait, les conditions d'implémentation de la méthode sont restreintes ; par exemple elle ne peut pas être mise en oeuvre au démarrage du véhicule.

Le brevet GB 2505666 A divulgue le calcul de l'angle de tangage d'une remorque en prenant des images de la remorque vue depuis la voiture, et en analysant les lignes, et notamment le changement des proportions entre les différentes lignes. Cette méthode n'utilise pas les lignes de fuites ni les points de fuite.

Le brevet WO 2009/027090 divulgue le calcul de l'angle de tangage d'une voiture en fonction des lignes de la route, et notamment en fonction des lignes de fuite et du point de fuite. Cette méthode ne s'intéresse pas au cas d'une remorque attachée à la voiture.

### Résumé

L'invention vient améliorer la situation, en proposant un système de détermination d'au moins un angle de tangage, et, dans un mode de réalisation, d'un angle de tangage et un angle de lacet d'une remorque par rapport à un tracteur.

En particulier, un système de détermination d'au moins un angle de tangage d'une remorque par rapport à un véhicule tracteur auquel la remorque est attachée est proposé, le système comprenant une caméra montée sur le véhicule tracteur et adaptée pour acquérir des images de la remorque sur lesquelles des lignes de la remorque parallèles à l'axe de la remorque sont visibles, et un calculateur, dans lequel le calculateur est configuré pour mettre en oeuvre les étapes suivantes :

- mettre en oeuvre un algorithme de détection de lignes sur au moins une image de la remorque acquise par la caméra,
- détecter dans l'image les lignes de la remorque parallèles à l'axe de la remorque, correspondant à des lignes de fuite, et déduire des lignes de fuite une position du point de fuite à la convergence des lignes de fuite, et
- à partir de la position du point de fuite, déterminer au moins un angle de tangage de la remorque par rapport au tracteur.

Avantageusement, mais facultativement, le système selon l'invention comprend en outre au moins l'une des caractéristiques suivantes.

Dans un mode de réalisation :

- un premier repère est associé à la remorque, centré sur le point d'ancrage de la remorque sur le tracteur, le repère comprenant deux premiers axes perpendiculaires à la direction de la remorque et un troisième axe parallèle à la direction de la remorque et s'étendant vers celle-ci,

- un deuxième repère est associé au tracteur, centré sur la caméra,
- un troisième repère est un repère bidimensionnel de l'image acquise par la caméra, centré sur le centre optique de la caméra, et
- les coordonnées du point de fuite V de la remorque dans le repère associé à la remorque sont $(0, 0, Z\infty)$, et dans le troisième repère sont (vi, vj),

et le calculateur est configuré pour déterminer l'angle de tangage $\beta$ de la remorque par rapport au tracteur à partir de la coordonnée verticale vj du point de fuite de la remorque dans le repère de l'image par :

$$\beta = \mathrm{atan}\left(-v_j\right).$$

Dans un mode de réalisation, le calculateur est en outre configuré pour déterminer l'angle de lacet $\alpha$ de la remorque par rapport au tracteur à partir d'une coordonnée horizontale vi du point de fuite de la remorque dans le repère de l'image par :

$$\alpha = \mathrm{atan}\left(v_i \cos\beta\right)$$

Dans un mode de réalisation, la caméra est en outre adaptée pour acquérir des images de la remorque sur lesquelles des lignes verticales de la remorque sont visibles, et dans lequel le calculateur est en outre configuré pour déterminer un axe de roulis de la remorque par rapport au tracteur à partir :

- des angles de lacet et de tangage de la remorque, et
- de la position dans le repère d'une image prise par la caméra d'un point de fuite W où convergent les lignes de fuite correspondant aux lignes verticales de la remorque.

Dans un mode de réalisation, les coordonnées du point de fuite W de la remorque dans le repère associé à la remorque sont $(X\infty, 0, 0)$, et dans le repère d'une image prise par la caméra sont (wi, wj), et le calculateur est configuré pour calculer l'angle $\theta$ de roulis à partir de la coordonnée horizontale wi du point de fuite W par :

$$\theta = \mathrm{atan}\left(\frac{\cos\alpha + w_i \sin\alpha\cos\beta}{w_i \sin\beta}\right).$$

La présente a également pour objet un procédé de détermination d'au moins un angle de tangage d'une remorque par rapport à un véhicule tracteur auquel la remorque est attachée, le procédé étant mis en oeuvre par un système comprenant une caméra et un calculateur et comprenant :

- l'acquisition par la caméra d'une image de la remorque sur laquelle des lignes de la remorque parallèles à l'axe principal de la remorque sont visibles,
- la mise en oeuvre d'un algorithme de détection de lignes pour détecter les lignes de la remorque parallèles à l'axe de la remorque, correspondant à des lignes de fuite de l'image,
- la déduction d'une position du point de fuite de la remorque à la convergence des lignes de fuite, et
- à partir des coordonnées du point de fuite, la détermination d'au moins un angle de tangage de la remorque par rapport au tracteur.

Dans un mode de réalisation, le procédé comprend en outre la détermination, à partir de l'angle de tangage et des coordonnées du point de fuite, d'un angle de lacet de la remorque par rapport au tracteur.

La présente a également pour objet un produit programme d'ordinateur, comprenant des instructions de code pour la mise en oeuvre du procédé comprenant les étapes de :

- mise en oeuvre sur une image d'une remorque sur laquelle des lignes de la remorque parallèles l'axe principal de la remorque sont visibles d'un algorithme de détection de lignes,
- sélection des lignes de fuite de l'image et déduction d'une position du point de fuite de la remorque à partir des lignes de fuite, et

- à partir des coordonnées du point de fuite, détermination d'au moins un angle de tangage de la remorque par rapport au tracteur, quand il est exécuté par un calculateur.

L'invention a également pour objet un procédé de détermination d'au moins un angle de lacet d'une remorque.

L'invention proposée permet de déterminer l'angle de tangage, mais aussi l'angle de lacet et de roulis d'une remorque par rapport à un tracteur avec moins de contraintes sur la géométrie de la remorque que l'art antérieur, puisqu'il suffit que des lignes parallèles à l'axe de la remorque soient visibles sur une image acquise de la caméra montée sur le véhicule tracteur. De telles lignes sont typiquement les arêtes d'un châssis de la remorque.

De plus l'invention ne nécessite pas de calibration impliquant de faire circuler le tracteur et sa remorque en ligne droite, l'angle de tangage et de lacet de la remorque peut être déterminé dès le démarrage.

**Brève description des dessins**

D'autres caractéristiques, détails et avantages apparaîtront à la lecture de la description détaillée ci-après, et à l'analyse des dessins annexés, sur lesquels :

[Fig. 1] La figure 1 représente un système selon un mode de réalisation de l'invention et illustre les repères rattachés respectivement à la remorque et au tracteur.

[Fig. 2] La figure 2 représente un exemple d'image acquise par une caméra sur laquelle figurent des lignes parallèles d'une remorque.

[Fig. 3] La figure 3 représente un exemple d'implantation d'une caméra sur un tracteur pour mettre en oeuvre le procédé de détermination d'au moins un angle d'une remorque attachée au tracteur.

[Fig. 4] La figure 4 représente schématiquement les principales étapes du procédé selon un mode de réalisation de l'invention.

**Description des modes de réalisation**

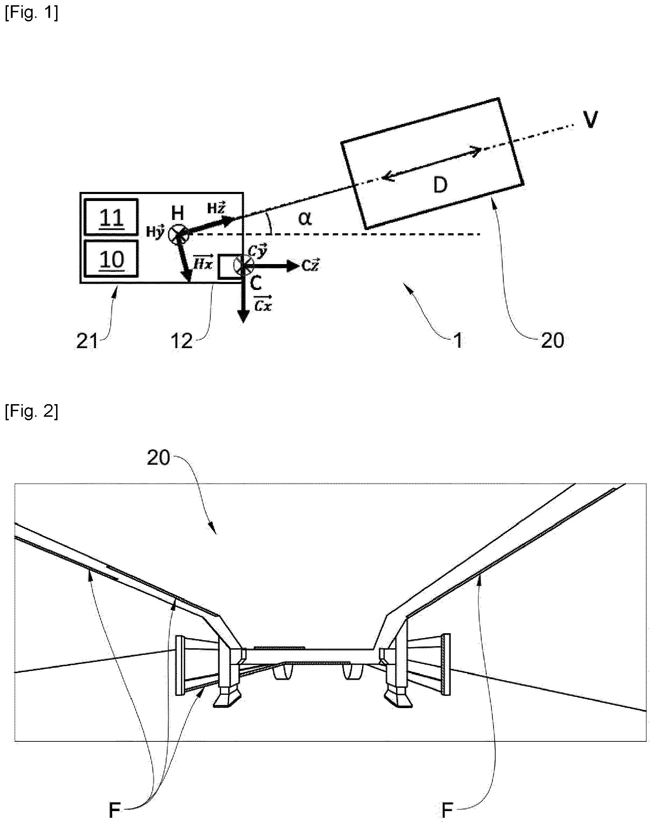

Il est maintenant fait référence à la figure 1, qui représente schématiquement un système 1 de détermination d'au moins un angle de tangage d'une remorque 20 par rapport à un véhicule tracteur 21 auquel la remorque est attachée. Le système 1 comprend un calculateur 10 et une mémoire 11 comprenant des instructions de code pour l'exécution du procédé décrit ci-après, quand elles sont exécutées par le calculateur 10. Le calculateur 10 peut être un processeur, microprocesseur, contrôleur, microcontrôleur, FPGA, ou autre.

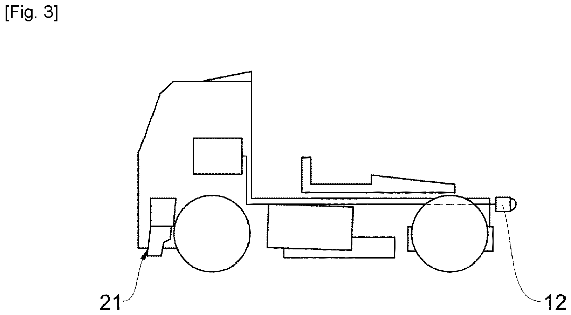

Le système 1 comprend en outre une caméra 12 montée sur le véhicule tracteur, et adaptée pour acquérir des images de la remorque sur lesquelles des lignes parallèles à l'axe D de la remorque sont visibles. A cet égard, la caméra 12 est avantageusement positionnée à l'arrière du véhicule tracteur, en étant dirigée vers l'arrière du véhicule tracteur avec un axe optique sensiblement parallèle à l'axe du tracteur, comme illustré par exemple dans la figure 3. Quand le véhicule composé du tracteur et de la remorque circule en ligne droite, l'axe de la caméra est aussi parallèle à la direction de circulation du véhicule et la direction de la remorque. En variante, l'axe optique peut former un angle avec l'axe du tracteur, et dans ce cas la caméra peut faire l'objet d'une calibration pour tenir compte de cet angle constant.

Dans un mode de réalisation, les lignes parallèles à l'axe de la remorque qui doivent apparaître sur une image prise par la caméra sont des lignes du châssis de la remorque, ces lignes étant visibles sur l'exemple représenté sur la figure 2. Pour ce faire, la caméra peut être positionnée à une hauteur par rapport au sol qui est inférieure à la hauteur du châssis de la remorque.

En fonction des géométries des remorques, on pourra adapter la position de la caméra ainsi que son optique pour assurer que des images acquises par la caméra fassent apparaître des lignes parallèles à l'axe de la remorque.

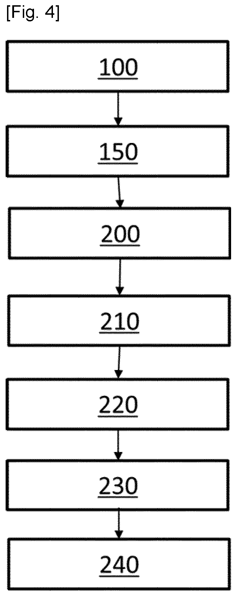

En référence à la figure 4, on va maintenant décrire le procédé de détermination d'au moins un angle de tangage de la remorque par rapport au véhicule tracteur, mis en oeuvre par le système 1.

Le procédé comprend une étape 100 d'acquisition, par la caméra 12, d'une image de la remorque sur laquelle figurent des lignes de la remorque parallèles à la direction de la remorque. L'image est ensuite transmise au contrôleur qui met en oeuvre la suite des étapes.

Avantageusement, mais facultativement, le contrôleur met en oeuvre une étape 150 de correction de la distorsion de l'image liée à l'objectif de la caméra, et qui permet de redresser des lignes droites pouvant paraître incurvées dans certaines portions de l'image.

Lors d'une étape 200, le contrôleur met en oeuvre sur l'image un algorithme de détection de lignes afin de détecter les bords saillants de la remorque sur l'image. Cette étape peut être mise en oeuvre en utilisant par exemple un algorithme décrit par J. Canny et al. dans « A computational approach to edge détection », IEEE Trans. Pattern Anal. Mach. Intell., vol. PAMI-8, bi. 6, pp679-698, bov. 1986.

Lors d'une étape 210 le contrôleur sélectionne les lignes de fuite de l'image, c'est-à-dire des lignes convergeant vers un point de fuite V pour déterminer la position sur l'image du point de fuite V à l'intersection des lignes de fuite. Compte-tenu de l'emplacement de la caméra, les lignes de fuite correspondent aux lignes de la remorque qui sont parallèles à l'axe de la remorque. Dans la figure 2, les lignes qui, parmi toutes les lignes détectées à l'étape 200, sont des lignes de fuite correspondant à des lignes parallèles à l'axe de la remorque, sont identifiées par la lettre F. Cette étape peut être mise en oeuvre de façon connue de l'Homme du Métier. On pourra par exemple se référer à la publication de F. Tsai et al., « Détection of Vanishing Points Using Hough Transform for Single View 3D Reconstruction », dans 34th Asian Conference on Remote Sensing 2013 ; ACRS 2013. Les coordonnées dans le repère de l'image du point de fuite V sont notées $(v_i, v_j)$, où $v_i$ est la coordonnée horizontale et $v_j$ est la coordonnée verticale.

De retour à la figure 1, on va maintenant décrire les conventions mathématiques adoptées dans la suite. La figure 1 est une représentation en vue de dessus d'un véhicule comprenant un tracteur 21 et une remorque 20. On définit un premier repère (C) rattaché au véhicule tracteur et centré sur le point C qui correspond à la position de la caméra. L'axe Cz de ce repère est parallèle à l'axe optique de la caméra, les axes Cx et Cy lui sont perpendiculaires, Cx étant inclus dans le plan de la représentation de la figure 1, et correspondant à un axe sensiblement horizontal, et Cy étant perpendiculaire à Cx, et correspondant à un axe sensiblement vertical quand le tracteur s'étend sur une route horizontale.

Un deuxième repère (H) est rattaché à la remorque et centré sur le point H qui correspond au point d'ancrage de la remorque au tracteur. L'axe Hz de ce repère est parallèle à la direction D de la remorque, les axes Hx et Hy lui sont perpendiculaires. Hx est inclus dans le plan de la figure 1 et Hy correspond également à un axe vertical.

On désigne par $\alpha$ l'angle de lacet de la remorque par rapport au tracteur, qui correspond à un angle de rotation autour de l'axe y. On désigne également par $\beta$ l'angle de tangage autour de l'axe x et par $\theta$ l'angle de roulis autour de l'axe z.

Les coordonnées, dans le repère rattaché à la remorque, du point de fuite V des lignes de fuite de l'image de la remorque sont $(0, 0, Z\infty)$.

Lors d'une étape 220, le contrôleur est ensuite configuré pour déterminer l'angle de tangage à partir des coordonnées $(v_i, v_j)$ du point de fuite V, dans un repère bidimensionnel (non représenté) de l'image prise par la caméra, où la première coordonnée est horizontale, la deuxième coordonnée est verticale, et l'origine du repère se situe au niveau du centre optique de la caméra.

On note R et T respectivement les matrices de rotation et de translation pour exprimer les coordonnées d'un point P du repère (H) rattaché à la remorque dans le repère (C) rattaché au tracteur, comme suit :

$$P = \begin{pmatrix} x_c \\ y_c \\ z_c \end{pmatrix} = R * \begin{pmatrix} x_H \\ y_H \\ z_H \end{pmatrix} + T$$

Où $x_c, y_c, z_c$ sont les coordonnées de P dans le repère (C) et $x_H, y_H, z_H$ sont les coordonnées de P dans le repère (H).

La matrice de rotation R se décompose en trois matrices de rotation Rx, Ry et Rz correspondant aux matrices des rotations des angles $\beta$, $\alpha$, et $\theta$ respectivement.

$$R_z = \begin{pmatrix} \cos(\theta) & -\sin(\theta) & 0 \\ \sin(\theta) & \cos(\theta) & 0 \\ 0 & 0 & 1 \end{pmatrix}$$

$$R_y = \begin{pmatrix} \cos(\alpha) & 0 & \sin(\alpha) \\ 0 & 1 & 0 \\ -\sin(\alpha) & 0 & \cos(\alpha) \end{pmatrix}$$

$$R_x = \begin{pmatrix} 1 & 0 & 0 \\ 0 & \cos(\beta) & -\sin(\beta) \\ 0 & \sin(\beta) & \cos(\beta) \end{pmatrix}$$

Avec $R = R_x * R_y * R_z$

Les coordonnées ($v_i$, $v_j$) du point de fuite V dans le repère de l'image prise par la caméra correspondent à des coordonnées ($x_{c,v}$, $y_{c,y}$, $z_{c,v}$) de ce point dans le repère (C) de la caméra, où $v_i$= $x_{c,v}$/ $z_{c,v}$, $v_j$= $y_{c,v}$/ $z_{c,v}$.

Par conséquent la relation suivante est applicable :

$$\begin{pmatrix} x_{c,v} \\ y_{c,v} \\ z_{c,v} \end{pmatrix} = R * \begin{pmatrix} 0 \\ 0 \\ Z\infty \end{pmatrix} + T = Rx * Ry * Rz * \begin{pmatrix} 0 \\ 0 \\ Z\infty \end{pmatrix} + T$$

$$= \begin{pmatrix} 1 & 0 & 0 \\ 0 & \cos(\beta) & -\sin(\beta) \\ 0 & \sin(\beta) & \cos(\beta) \end{pmatrix} * \begin{pmatrix} \cos(\alpha) & 0 & \sin(\alpha) \\ 0 & 1 & 0 \\ -\sin(\alpha) & 0 & \cos(\alpha) \end{pmatrix} * \begin{pmatrix} \cos(\theta) & -\sin(\theta) & 0 \\ \sin(\theta) & \cos(\theta) & 0 \\ 0 & 0 & 1 \end{pmatrix}$$

$$* \begin{pmatrix} 0 \\ 0 \\ Z\infty \end{pmatrix} + T$$

$$= \begin{pmatrix} 1 & 0 & 0 \\ 0 & \cos(\beta) & -\sin(\beta) \\ 0 & \sin(\beta) & \cos(\beta) \end{pmatrix} * \begin{pmatrix} \cos(\alpha) & 0 & \sin(\alpha) \\ 0 & 1 & 0 \\ -\sin(\alpha) & 0 & \cos(\alpha) \end{pmatrix} * \begin{pmatrix} 0 \\ 0 \\ Z\infty \end{pmatrix} + T$$

$$= \begin{pmatrix} 1 & 0 & 0 \\ 0 & \cos(\beta) & -\sin(\beta) \\ 0 & \sin(\beta) & \cos(\beta) \end{pmatrix} * \begin{pmatrix} \sin(\alpha) * Z\infty \\ 0 \\ \cos(\alpha) * Z\infty \end{pmatrix} + T$$

$$= \begin{pmatrix} \sin(\alpha) * Z\infty \\ -\sin(\beta) * \cos(\alpha) * Z\infty \\ \cos(\beta) * \cos(\alpha) * Z\infty \end{pmatrix} + T$$

La translation T peut être négligée par rapport aux termes de la matrice quand $Z\infty$ tend vers l'infini, ce qui est le cas du point de fuite.

On obtient alors la relation :

$$v_i = \frac{x_{c,v}}{z_{c,v}} = \frac{\sin(\alpha) * Z\infty}{\cos(\beta) * \cos(\alpha) * Z\infty} = \frac{\tan(\alpha)}{\cos(\beta)}$$

$$v_j = \frac{y_{c,v}}{z_{c,v}} = -\tan(\beta)$$

Lors de l'étape 220, le calculateur détermine donc le tangage β de la remorque à partir de la position du point de fuite sur l'image prise par la caméra, par :

$$\beta = \text{atan}(-v_j)$$

Avantageusement, mais facultativement, le calculateur peut aussi déterminer lors d'une étape 230 le lacet α de la remorque à partir du tangage et de la position du point de fuite dans le repère de l'image prise par la caméra, par :

$$\alpha = \text{atan}(v_i * \cos(\beta))$$

Dans un mode de réalisation, le système 1 est également configuré pour pouvoir déterminer aussi un angle de roulis de la remorque par rapport au véhicule tracteur.

Pour cela, la caméra 12 doit être positionnée relativement à la remorque de sorte que, sur une image acquise par la caméra, soient également visibles des lignes perpendiculaires à l'axe de la remorque et correspondant, quand la remorque est sur un plan horizontal, à des lignes verticales. Ceci peut être obtenu par exemple grâce à des arêtes verticales situées en face avant de la remorque, avec une caméra présentant un angle d'ouverture important.

Dans ce cas, le contrôleur peut réitérer l'étape 210 pour sélectionner les lignes de fuite de l'image correspondant à des lignes verticales de la remorque, et en déduire la position dans le repère de l'image du point de fuite W correspondant à l'intersection de ces lignes de fuite. Il n'est pas nécessaire que le point de fuite W soit dans l'image, c'est-à-dire dans les limites de l'image, ses coordonnées dans le repère de l'image peuvent être déterminées à partir des lignes de fuite même si ces coordonnées dépassent les coordonnées des bords de l'image Ceci est applicable également, bien que moins fréquent, au point de fuite V. En variante la mise en oeuvre de l'étape 210 pour déterminer la position du point de fuite W peut être faite lors de la même étape 210 où le contrôleur détermine la position dans le repère de l'image du point de fuite V. Le contrôleur peut ensuite déterminer lors d'une étape 240 le roulis $\theta$ de la remorque à partir de la position $(w_i, w_j)$, dans le repère de l'image acquise par la caméra, du point de fuite W.

En effet, en reprenant les mêmes notations que précédemment, on peut considérer que le point de fuite W présente, dans le repère de la remorque, des coordonnées $(X\infty, 0, 0)$, les positions en Y et en Z de ce point sont quelconques et peuvent être ramenées à 0. On obtient alors la relation suivante :

$$\begin{pmatrix} x_{c,w} \\ y_{c,w} \\ z_{c,w} \end{pmatrix} = R * \begin{pmatrix} X\infty \\ 0 \\ 0 \end{pmatrix} + T = \text{Rx} * \text{Ry} * \text{Rz} * \begin{pmatrix} X\infty \\ 0 \\ 0 \end{pmatrix} + T$$

$$= \text{Rx} * \text{Ry} * \begin{pmatrix} \cos(\theta) * \text{HX}\infty \\ \sin(\theta) * \text{HX}\infty \\ 0 \end{pmatrix} + T$$

Où $x_{c,w}$, $y_{c,w}$ et $z_{c,w}$ sont les coordonnées, dans le repère (C) du tracteur, du point de fuite W, avec $w_i = xc,w/zc,w$ et $w_j = y_{c,w}/z_{c,w}$.

Comme précédemment, la translation T peut être négligée, et on obtient la relation :

$$w_i = \frac{\text{Rxy11} * \cos(\theta) * X\infty + \text{Rxy12} * \sin(\theta) * X\infty}{\text{Rxy31} * \cos(\theta) * X\infty + \text{Rxy32} * \sin(\theta) * X\infty} = \frac{\text{Rxy11} + \text{Rxy12} * tan(\theta)}{\text{Rxy31} + \text{Rxy32} * tan(\theta)}$$

où $R_{xyij}$ désigne le terme de la i$^{\text{ème}}$ ligne et j$^{\text{ème}}$ colonne de la matrice $R_{xy} = R_x * R_y$. Ces termes sont connus une fois l'angle de tangage $\beta$ et de lacet $\alpha$ déterminés. L'angle de roulis $\theta$ est donc obtenu par :

$$\theta = Arctan(\frac{-\text{Rxy11} + w_i * \text{Rxy31}}{\text{Rxy12} - w_i * \text{Rxy32}})$$

Grâce aux relations qui précèdent, on peut noter que les différents angles peuvent être déterminés uniquement à partir d'une image de la remorque acquise par la caméra, sans nécessiter aucun calibrage ni aucune circulation de la remorque pour définir une position de référence.

## Revendications

1. Système (1) de détermination d'au moins un angle de tangage d'une remorque par rapport à un véhicule tracteur (21) auquel la remorque est attachée, le système (1) comprenant une caméra (12) montée sur le véhicule tracteur (21) et adaptée pour acquérir des images de la remorque sur lesquelles des lignes de la remorque parallèles à l'axe de la remorque (20) sont visibles, et un calculateur (10), dans lequel le calculateur est configuré pour mettre en oeuvre les étapes suivantes :

   - mettre en oeuvre (200) un algorithme de détection de lignes sur au moins une image de la remorque acquise par la caméra (12),
   - détecter (210) dans l'image les lignes de la remorque parallèles à l'axe de la remorque, correspondant à des lignes de fuite, et déduire des lignes de fuite une position du point de fuite à la convergence des lignes de fuite, et
   - à partir de la position du point de fuite, déterminer (220) au moins un angle de tangage de la remorque par rapport au tracteur.

**2.** Système (1) selon la revendication précédente, dans lequel,

- un premier repère est associé à la remorque, centré sur le point d'ancrage de la remorque sur le tracteur, le repère comprenant deux premiers axes perpendiculaires à la direction de la remorque et un troisième axe parallèle à la direction de la remorque et s'étendant vers celle-ci,
- un deuxième repère est associé au tracteur, centré sur la caméra,
- un troisième repère est un repère bidimensionnel de l'image acquise par la caméra, centré sur le centre optique de la caméra, et
- les coordonnées du point de fuite V de la remorque dans le repère associé à la remorque sont $(0, 0, Z\infty)$, et dans le troisième repère sont $(v_i, v_j)$,

et le calculateur est configuré pour déterminer (220) l'angle de tangage $\beta$ de la remorque par rapport au tracteur à partir de la coordonnée verticale $v_j$ du point de fuite de la remorque dans le repère de l'image par :

$$\beta = \mathrm{atan}\left(-v_j\right).$$

**3.** Système (1) selon la revendication 2, dans lequel le calculateur est en outre configuré pour déterminer (230) l'angle de lacet $\alpha$ de la remorque par rapport au tracteur à partir d'une coordonnée horizontale $v_i$ du point de fuite de la remorque dans le repère de l'image par :

$$\alpha = \mathrm{atan}\left(v_i cos\beta\right)$$

**4.** Système (1) selon la revendication 3, dans lequel la caméra (12) est en outre adaptée pour acquérir des images de la remorque sur lesquelles des lignes verticales de la remorque sont visibles, et dans lequel le calculateur est en outre configuré (240) pour déterminer un axe de roulis de la remorque (20) par rapport au tracteur (21) à partir:

- des angles de lacet et de tangage de la remorque, et
- de la position dans le repère d'une image prise par la caméra d'un point de fuite W où convergent les lignes de fuite correspondant aux lignes verticales de la remorque.

**5.** Système (1) selon la revendication 4, dans lequel les coordonnées du point de fuite W de la remorque (20) dans le repère associé à la remorque sont $(X\infty, 0,0)$, et dans le repère d'une image prise par la caméra sont $(w_i, w_j)$, et le calculateur (10) est configuré pour calculer (240) l'angle $\theta$ de roulis à partir de la coordonnée horizontale $w_i$ du point de fuite W par :

$$\theta = \mathrm{atan}\left(\frac{cos\alpha + w_i sin\alpha cos\beta}{w_i sin\beta}\right).$$

**6.** Procédé de détermination d'au moins un angle de tangage d'une remorque (20) par rapport à un véhicule tracteur (21) auquel la remorque est attachée, le procédé étant mis en oeuvre par un système (1) comprenant une caméra (12) montée sur le véhicule tracteur (21) et un calculateur (10) et comprenant :

- l'acquisition (100) par la caméra d'une image de la remorque sur laquelle des lignes de la remorque parallèles à l'axe principal de la remorque sont visibles,
- la mise en oeuvre (200) d'un algorithme de détection de lignes pour détecter les lignes de la remorque parallèles à l'axe de la remorque, correspondant à des lignes de fuite de l'image,
- la détection (210) d'une position du point de fuite de la remorque à la convergence des lignes de fuite, et
- à partir de la position du point de fuite, la détermination (220) d'au moins un angle de tangage de la remorque par rapport au tracteur.

**7.** Procédé selon la revendication précédente, comprenant en outre la détermination, à partir de l'angle de tangage et des coordonnées du point de fuite, d'un angle de lacet de la remorque par rapport au tracteur.

**8.** Produit programme d'ordinateur, comprenant des instructions de code pour la mise en oeuvre du procédé comprenant les étapes de :

- mise en oeuvre (200) sur au moins une image d'une remorque sur laquelle des lignes de la remorque parallèles l'axe principal de la remorque sont visibles d'un algorithme de détection de lignes,
- détection (210) des lignes de fuite de l'image et déduction d'une position du point de fuite de la remorque à partir des lignes de fuite, et
- à partir de la position du point de fuite, détermination (220) d'au moins un angle de tangage de la remorque par rapport au tracteur,

quand il est exécuté par un calculateur (10).

## Patentansprüche

1. System (1) zur Bestimmung mindestens eines Nickwinkels eines Anhängers bezüglich eines Zugfahrzeugs (21), an dem der Anhänger befestigt ist, wobei das System (1) eine Kamera (12), die auf das Zugfahrzeug (21) montiert und geeignet ist, Bilder des Anhänger zu erfassen, auf denen Linien des Anhängers parallel zur Achse des Anhängers (20) sichtbar sind, und einen Rechner (10) enthält, wobei der Rechner konfiguriert ist, die folgenden Schritte durchzuführen:

- Durchführen (200) eines Erkennungsalgorithmus von Linien auf mindestens einem von der Kamera (12) erfassten Bild des Anhängers,
- Erkennen (210) der Fluchtlinien entsprechenden Linien des Anhängers parallel zur Achse des Anhängers im Bild, und Ableiten einer Position des Fluchtpunkts von den Fluchtlinien an der Konvergenz der Fluchtlinien, und
- ausgehend von der Position des Fluchtpunkts, Bestimmen (220) mindestens eines Nickwinkels des Anhängers bezüglich der Zugmaschine.

2. System (1) nach dem vorhergehenden Anspruch, wobei

- ein auf den Verankerungspunkt des Anhängers an der Zugmaschine zentriertes erstes Bezugssystem dem Anhänger zugeordnet ist, wobei das Bezugssystem zwei erste Achsen lotrecht zur Richtung des Anhängers und eine dritte Achse parallel zur Richtung des Anhängers und sich zu diesem erstreckend enthält,
- ein auf die Kamera zentriertes zweites Bezugssystem der Zugmaschine zugeordnet ist,
- ein drittes Bezugssystem ein zweidimensionales Bezugssystem des von der Kamera erfassten Bilds ist, das auf die optische Mitte der Kamera zentriert ist, und
- die Koordinaten des Fluchtpunkts V des Anhängers im dem Anhänger zugeordneten Bezugssystem $(0, 0, Z\infty)$ sind, und im dritten Bezugssystem $(v_i, v_j)$ sind,

und der Rechner konfiguriert ist, den Nickwinkel $\beta$ des Anhängers bezüglich der Zugmaschine ausgehend von der senkrechten Koordinate $v_j$ des Fluchtpunkts des Anhängers im Bezugssystem des Bilds durch:

$$\beta = \text{atan}(-v_j)$$

zu bestimmen (220).

3. System (1) nach Anspruch 2, wobei der Rechner außerdem konfiguriert ist, den Gierwinkel $\alpha$ des Anhängers bezüglich der Zugmaschine ausgehend von einer waagrechten Koordinate $v_i$ des Fluchtpunkts des Anhängers im Bezugssystem des Bilds durch:

$$\alpha = \text{atan}(v_i \cos\beta)$$

zu bestimmen (230).

4. System (1) nach Anspruch 3, wobei die Kamera (12) außerdem geeignet ist, Bilder des Anhängers zu erfassen, auf denen senkrechte Linien des Anhängers sichtbar sind, und wobei der Rechner außerdem konfiguriert ist (240), eine Rollachse des Anhängers (20) bezüglich der Zugmaschine (21) zu bestimmen ausgehend von:

- Gier- und Nickwinkeln des Anhängers, und

- der Position eines Fluchtpunkts W im Bezugssystem eines von der Kamera aufgenommenen Bilds, an dem die Fluchtlinien entsprechend den senkrechten Linien des Anhängers konvergieren.

5. System (1) nach Anspruch 4, wobei die Koordinaten des Fluchtpunkts W des Anhängers (20) im dem Anhänger zugeordneten Bezugssystem (X∞,0,0) sind, und im Bezugssystem eines von der Kamera aufgenommenen Bilds ($w_i$, $w_j$) sind, und der Rechner (10) konfiguriert ist, den Rollwinkel θ ausgehend von der waagrechten Koordinate $w_i$ des Fluchtpunkts W durch:

$$\theta = atan\left(\frac{cos\alpha + w_i sin\alpha cos\beta}{w_i sin\beta}\right)$$

zu berechnen (240).

6. Verfahren zur Bestimmung mindestens eines Nickwinkels eines Anhängers (20) bezüglich eines Zugfahrzeugs (21), an dem der Anhänger befestigt ist, wobei das Verfahren von einem System (1) durchgeführt wird, das eine auf das Zugfahrzeug (21) montierte Kamera (12) und einen Rechner (10) enthält, und enthält:

- die Erfassung (100) eines Bilds des Anhängers durch die Kamera, auf dem Linien des Anhängers parallel zur Hauptachse des Anhängers sichtbar sind,
- die Durchführung (200) eines Erkennungsalgorithmus von Linien, um die Fluchtlinien des Bilds entsprechenden Linien des Anhängers parallel zu Achse des Anhängers zu erkennen,
- die Erkennung (210) einer Position des Fluchtpunkts des Anhängers an der Konvergenz der Fluchtlinien, und
- ausgehend von der Position des Fluchtpunkts die Bestimmung (220) mindestens eines Nickwinkels des Anhängers bezüglich der Zugmaschine.

7. Verfahren nach dem vorhergehenden Anspruch, das außerdem die Bestimmung eines Gierwinkels des Anhängers bezüglich der Zugmaschine ausgehend vom Nickwinkel und den Koordinaten des Fluchtpunkts enthält.

8. Computerprogrammprodukt, das Codeanweisungen für die Durchführung des Verfahrens enthält, das die Schritte enthält:

- Durchführung (200) eines Erkennungsalgorithmus von Linien auf mindestens einem Bild eines Anhängers, auf dem Linien des Anhängers parallel zur Hauptachse des Anhängers sichtbar sind,
- Erkennung (210) der Fluchtlinien des Bilds und Ableitung einer Position des Fluchtpunkts des Anhängers ausgehend von den Fluchtlinien, und
- ausgehend von der Position des Fluchtpunkts Bestimmung (220) mindestens eines Nickwinkels des Anhängers bezüglich der Zugmaschine,

wenn es von einem Rechner (10) ausgeführt wird.

**Claims**

1. System (1) for determining at least one pitch angle of a trailer relative to a towing vehicle (21) to which the trailer is attached, the system (1) comprising a camera (12) mounted on the towing vehicle (21) and capable of acquiring images of the trailer in which lines of the trailer parallel to the axis of the trailer (20) are visible, and a computer (10), in which the computer is configured to implement the following steps:

- implementing (200) a line-detection algorithm on at least one image of the trailer acquired by the camera (12),
- detecting (210) in the image the lines of the trailer parallel to the trailer axis, corresponding to vanishing lines, and deducing from the vanishing lines a position of the vanishing point at the convergence of the vanishing lines, and
- from the position of the vanishing point, determining (220) at least one pitch angle of the trailer relative to the towing vehicle.

2. System (1) according to the preceding claim, in which

- a first reference frame is associated with the trailer, centred on the anchor point of the trailer to the towing vehicle, the reference frame comprising two first axes perpendicular to the direction of the trailer and a third axis parallel to the direction of the trailer and extending theretoward,
- a second reference frame is associated with the towing vehicle, centred on the camera,
- a third reference frame is a two-dimensional reference frame of the image acquired by the camera, centred on the optical centre of the camera, and
- the coordinates of the vanishing point V of the trailer in the reference frame associated with the trailer are (0, 0, Z∞), and in the third reference frame are ($v_i$, $v_j$), and the computer is configured to determine (220) the pitch angle β of the trailer relative to the towing vehicle from the vertical coordinate $v_j$ of the vanishing point of the trailer in the reference frame of the image by:

$$\beta = \mathrm{atan}\left(-v_j\right).$$

3. System (1) according to Claim 2, wherein the computer is further configured to determine (230) the yaw angle α of the trailer relative to the towing vehicle from a horizontal coordinate $v_i$ of the vanishing point of the trailer in the reference frame of the image by:

$$\alpha = \mathrm{atan}\left(v_i \cos\beta\right)$$

4. System (1) according to Claim 3, wherein the camera (12) is further capable of acquiring images of the trailer in which vertical lines of the trailer are visible, and wherein the computer is further configured (240) to determine a roll axis of the trailer (20) relative to the towing vehicle (21) from:

- yaw and pitch angles of the trailer, and
- the position in the reference frame of an image taken by the camera of a vanishing point W where the vanishing lines corresponding to the vertical lines of the trailer converge.

5. System (1) according to Claim 4, in which the coordinates of the vanishing point W of the trailer (20) in the reference frame associated with the trailer are (X∞, 0,0), and in the reference frame of an image taken by the camera are ($w_i$, $w_j$), and the computer (10) is configured to calculate (240) the roll angle θ from the horizontal coordinate $w_i$ of the vanishing point W by:

$$\theta = \mathrm{atan}\left(\frac{\cos\alpha + w_i \sin\alpha \cos\beta}{w_i \sin\beta}\right).$$

6. Method for determining at least one pitch angle of a trailer (20) relative to a towing vehicle (21) to which the trailer is attached, the method being implemented by a system (1) comprising a camera (12) mounted on the towing vehicle (21) and a computer (10) and comprising:

- the camera acquiring (100) an image of the trailer in which lines of the trailer parallel to the main axis of the trailer are visible,
- implementing (200) a line-detection algorithm to detect the lines of the trailer parallel to the axis of the trailer, corresponding to vanishing lines of the image,
- detecting (210) a position of the vanishing point of the trailer at the convergence of the vanishing lines, and
- from the position of the vanishing point, determining (220) at least one pitch angle of the trailer relative to the towing vehicle.

7. Method according to the preceding claim, further comprising determining, from the pitch angle and the coordinates of the vanishing point, a yaw angle of the trailer relative to the towing vehicle.

8. Computer program product, comprising code instructions for implementing the method comprising the steps of:

- implementing (200) a line-detection algorithm on at least one image of a trailer in which lines of the trailer parallel to the main axis of the trailer are visible,
- detecting (210) the vanishing lines of the image and deducing a position of the vanishing point of the trailer from the vanishing lines, and
- from the position of the vanishing point, determining (220) at least one pitch angle of the trailer relative to the towing vehicle,

when it is executed by a computer (10).

[Fig. 1]

[Fig. 2]

[Fig. 3]

[Fig. 4]

```
┌──────────────────────┐
│         100          │
└──────────────────────┘
            │
            ▼
┌──────────────────────┐
│         150          │
└──────────────────────┘
            │
            ▼
┌──────────────────────┐
│         200          │
└──────────────────────┘
            │
            ▼
┌──────────────────────┐
│         210          │
└──────────────────────┘
            │
            ▼
┌──────────────────────┐
│         220          │
└──────────────────────┘
            │
            ▼
┌──────────────────────┐
│         230          │
└──────────────────────┘
            │
            ▼
┌──────────────────────┐
│         240          │
└──────────────────────┘
```

**EP 4 094 225 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2505666 A

- WO 2009027090 A

**Littérature non-brevet citée dans la description**

- **CHRISTOPHER CHARLES DE SAXE.** *Visio-based trailer pose estimation for articulated vehicles,* 2017, https://doi.org/10.17863/CAM.14370
- **J. CANNY et al.** A computational approach to edge détection. *IEEE Trans. Pattern Anal. Mach. Intell.,* 1986, vol. PAMI-8 (6), 679-698

- **F. TSAI et al.** Détection of Vanishing Points Using Hough Transform for Single View 3D Reconstruction. *dans 34th Asian Conference on Remote Sensing 2013 ; ACRS,* 2013